# EUROPÄISCHE PATENTSCHRIFT

(11) **EP 1 426 337 B1**
(45) Veröffentlichungstag und Bekanntmachung des Hinweises auf die Patenterteilung: **09.03.2011**
(21) Anmeldenummer: 02102674.5
(22) Anmeldetag: 03.12.2002
(51) Int. Cl.: C02F 3/10

(54) **Verfahren und Anlage zur biologischen Behandlung von Abwasser**
Process and plant for biological treatment of waste water
Procédé et installation pour le traitement biologique des eaux résiduaires

(43) Veröffentlichungstag der Anmeldung: 09.06.2004
(73) Patentinhaber: Ford Global Technologies, LLC, Dearborn, MI 48126 (US)
(72) Erfinder: Rick, Manfred, 53797, Lohmar (DE)
(74) Vertreter: Drömer, Hans-Carsten

(56) Entgegenhaltungen:
- EP-A- 0 087 127
- WO-A-91/17959
- DD-A- 282 901
- US-A- 4 183 809
- US-A- 5 846 424
- PATENT ABSTRACTS OF JAPAN vol. 011, no. 315 (C-451), 14. Oktober 1987 (1987-10-14) -& JP 62 097696 A (NISHIHARA ENVIRON SANIT RES CORP), 7. Mai 1987 (1987-05-07)

## Beschreibung

Die Erfindung bezieht sich auf ein Verfahren zur biologischen Behandlung von Abwasser in Festbettreaktoren. Dabei wird das Abwasser in zwei Teilströme aufgeteilt. In einen Teilstrom werden die Schadstoffe im Abwasser aerob behandelt während im anderen Teilstrom die Schadstoffe anaerob behandelt werden. Die Erfindung betrifft weiterhin eine Anlage, die dazu geeignet ist, daß vorher beschriebene Verfahren durchzuführen.

Abwässer im allgemeinen und insbesondere auch Abwässer aus der Industrie sind in der Regel mit einer Vielzahl von organischen Verbindungen belastet. Da zum Abbau bzw. zur Oxidation dieser Verbindungen der im Wasser gelöste Sauerstoff aufgebraucht wird, müssen die Abwässer vor dem Einleiten in die Kanalisation oder in Gewässer gereinigt werden. Dies geschieht üblicherweise mittels biologischer Behandlung des Abwassers, der oder die Schritte während der Reinigung des Abwassers werden auch Behandlungsstufen genannt. Dabei sind verschieden Verfahren zur biologischen Behandlung von Abwasser bekannt und werden z. B. im ATV-Handbuch Seite 312 ff beschrieben (ATV Handbuch, 4 Auflage, Verlag Ernst & Sohn, 1997). So sind z. B. kontinuierliche Verfahren zur biologischen Behandlung von Abwasser in einem sogenannten Biofilter bekannt. Biofiltrationsanlagen arbeiten ähnlich wie Sandfilter. In ein Behältnis wird ein Trägermaterial gefüllt, auf dem sich die Mikroorganismen anlagern können. Diese Anlagen werden daher auch Festbettreaktoren genannt, da das Trägermaterial sich ortsfest in einem Reaktor befindet. Je nach Anlage werden ein oder mehr Behältnisse parallel oder hintereinander angeordnet. Die Behältnisse werden mit Luftsauerstoff versorgt, um den biologischen Abbauprozeß durch die Mikroorganismen in Gang zu halten. Das Abwasser wird mit Hilfe einer Pumpe durch den einen oder die mehreren Behältnisse gepumpt, wobei es grundsätzlich verschiedene Verfahren gibt, die sich daraus ergeben, ob das Abwasser von unten nach oben oder von oben nach unten durch das oder die Behältnisse geleitet wird. Auch das Einbringen des Sauerstoffs z. B. durch Druckluft erfolgt entweder mit oder gegen die Strömungsrichtung. In der Regel sind Verfahren mit Festbettreaktor nur für Abwasser ohne grobe absetzbare Stoffe geeignet. Daher sind üblicherweise Vorreinigungsstufen mit Grobrechenanlagen erforderlich.

Der biologisch abbaubare Schadstoffgehalt im Abwasser wird üblicherweise durch zwei Summenparameter erfaßt und die Wirksamkeit einer biologischen Behandlungsstufe mit diesen Parametern gemessen.
Der chemische Sauerstoffbedarf (CSB) eines Abwassers stellt den Verbrauch von gelöstem Sauerstoff im Abwasser dar, der zur Oxidation aller organischen und anorganischen Verbindungen im Wasser erforderlich ist, unabhängig davon, ob diese biologisch abbaubar sind.
Der biologische Sauerstoffbedarf (BSB5) beschreibt den Sauerstoffbedarf aerober Mikroorganismen, die für den biologischen Abbau von Schadstoffen innerhalb von 5 Tagen erforderlich ist. Beide Werte werden als Konzentration im Wasser in mg/l angegeben. Naturgemäß ist die CSB-Konzentration in einem Wasser immer höher oder mindestens gleich der BSB5 - Konzentration, da der BSB5 im CSB mit erfaßt wird.

Der eigentliche biologische Abbau der Schadstoffe beginnt im Trägermaterial des Festbettreaktors. Die vorhandenen oder ggf. zugefügten Bakterien bilden um das Trägermaterial eine Biozönose, die aus einer Schleimmatrix besteht, in der die Bakterien oder auch höhere Organismen eingelagert sind (ein sog. Biofilm). Mit zunehmendem Alter bilden sich unterschiedliche Generationen von Mikroorganismen, die sich in der Regel von den vorherigen Generationen ernähren. Wichtig ist, daß die Bakterien in der Schleimmatrix eingebettet und somit ortsfest sind.

Das zu behandelnde Abwasser durchströmt das Behältnis mit dem Trägermaterial, also den Festbettreaktor. Die im Abwasser befindlichen biologisch abbaubaren organischen Schadstoffe werden von den in der Schleimmatrix eingelagerten Mikroorganismen aufgenommen und abgebaut. Dies erfolgt durch Oxidation der organischen Verbindungen im wesentlichen zu CO₂ und H₂O. Um die Oxidation zu ermöglichen, muß neben einem ausreichenden Nahrungsangebot vor allem Luftsauerstoff zur Verfügung gestellt werden. Dieser Prozeß wird als aerober Abbau bezeichnet.

Gleichzeitig und parallel findet ein zweiter Prozeß statt, bei dem die Oxidation von Ammonium-Stickstoff NH₄-N zu Nitrit und später - wieder mit Sauerstoff - zu Nitrat erfolgt. Zur Durchführung dieses Prozesses sind nur sehr wenige Bakterienstämme in der Lage. Der erforderliche Sauerstoff zur Nitritoxidation wird dabei von den Bakterien aus dem im Wasser befindlichen CO₂ entnommen. Bei der Oxidation von NH₄ zu NO₃ wird Wasserstoff H frei, was wiederum zu einer Absenkung des pH-Wertes führt. Diesen Vorgang bezeichnet man als anaeroben Abbau. Da Nitrit grundsätzlich toxisch ist, ist eine Oxidation von Nitrit zu Nitrat erforderlich.

Die Effektivität eines biologisch arbeitenden Festbettreaktors (Bio-Festbettreaktor) ist im wesentlichen von folgenden Parametern abhängig:
- Nahrungsangebot
- Sauerstoffangebot
- Fließgeschwindigkeit im Filter
- Verweilzeit im Filter.

Das Nahrungsangebot im Filter wird durch die Schadstoffe bestimmt, die abgebaut werden sollen. Um den Zellaufbau der Bakterien im Biofilm zu gewährleisten müssen aber auch andere erforderliche Spurenelemente vorhanden sein, die bei Bedarf hinzugefügt werden müssen.

Der Bedarf an Sauerstoff wird durch die Schadstoffmenge bestimmt und wird als Luftsauerstoff in den Prozeß eingebracht.

Da die Biomasse im Festbett immobil ist, hängt es von der Fließgeschwindigkeit ab, wie viel Nährstoffe und Sauerstoff zu den Bakterien transportiert wird. Geringe Fließgeschwindigkeit bedeutet geringer Nährstoff- und Sauerstofftransport und somit eine weniger dichte Besiedelung des Trägermaterials. Deshalb sind hohe Fließgeschwindigkeiten anzustreben.

Dies steht im Gegensatz zur Verweilzeit im Reaktor. Unter optimalen Randbedingungen benötigt die Biozönose eine bestimmte Zeit, um eine Schadstofffracht abzubauen. Es ist daher eine möglichst hohe Verweilzeit anzustreben bei gleichzeitig hoher Fließgeschwindigkeit. Bei Belebtschlammanlagen wird dies durch mäanderförmig gestaltete Fließbecken realisiert.

In der DE 42 40 064 wird ein Verfahren beschrieben, bei dem textiles Abwasser in mehreren Schritten aufbereitet wird. Zur biologischen Reinigung wird dabei das Abwasser in eine belüftete Klärstufe, gefüllt mit Braunkohlekoks als Trägermaterial, eingeleitet. Nach einer Verweilzeit von ca. 4 - 10 h wird das Wasser dann weiter behandelt. Nachteil dieses Verfahrens ist die lange Verweilzeit des Abwassers in der Behandlungsstufe. Um eine effektive Abbauleistung zu erzielen sind daher große Behältervolumen erforderlich. Des Weiteren wird der Schadstoffabbau aerob wie anaerob in einen Verfahrensschritt vollzogen.

Zur Behandlung von Abwasser ist es aus der DE 42 05 787 bekannt, dieses Abwasser zunächst einem oder mehreren aeroben Behandlungsschritten zu unterziehen und zum Schluß das Abwasser in einer anaeroben Abbaustufe weiterzubehandeln. Eine Steuerung oder Beeinflussung dieser anaeroben Behandlungsstufe ist jedoch nicht gegeben.

Vor diesem Hintergrund war es die Aufgabe der vorliegenden Erfindung, ein Verfahren zur biologischen Behandlung von Abwasser zu entwickeln, daß mit möglichst einfachen Mitteln bei geringem Platzbedarf einen kontinuierlichen aeroben und anaeroben Abbau der Schadstoffe im Abwasser ermöglicht und dabei dazu geeignet ist, auf unterschiedliche Verschmutzungsgrade des Abwassers schnell zu reagieren.

Diese Aufgabe wird durch ein Verfahren zur biologischen Behandlung von Abwässern mit den Merkmalen des Anspruches 1 gelöst. Eine Weitere vorteilhafte Ausgestaltung ist in dem Unteranspruch 2 enthalten.

Erfindungsgemäß wird der Abwasserstrom (Gesamtvolumenstrom) in zwei Teilströme aufgeteilt. Dabei liegt der Erfindung der Gedanke zugrunde, daß der gleichzeitige Ablauf von aeroben und anaeroben Abbauprozessen in einem Reaktor möglich ist, aber daß sich die aeroben und anaeroben Abbauprozesse gegenseitig negativ beeinflussen.

So läuft der aerobe Schadstoffabbau im alkalischen Bereich besser ab, da der Biofilm in einem sauren Milieu dünner wird. Der anaerobe Schadstoffabbau hingegen führt, wie oben beschrieben, zu einem saurer werdenden Milieu und behindert damit den aeroben Schadstoffabbau.

Während der aerobe Abbau bei hohen Fließgeschwindigkeiten besser abläuft, weil so der Nährstoff- und Sauerstofftransport gewährleistet ist, erfolgt der anaerobe Abbau besser bei geringen Fließgeschwindigkeiten, da die Reaktionsgeschwindigkeit in Abhängigkeit vom CO₂ Angebot sehr langsam ist.

Festbettreaktoren werden in bekannter Weise bei Bedarf zurückgespult. Läuft nun der aerobe und der anaerobe Schadstoffabbau in einem Reaktor ab, so werden während des Rückspülens die anaeroben Bereiche zerstört und müssen sich nach jedem Rückspülen neu bilden. Dies vermindert die Schadstoffabbauleistung deutlich.

Der erste Teilstrom durchläuft nun eine aerobe biologische Behandlungsstufe, während der zweite Teilstrom eine anaerobe Behandlungsstufe durchläuft, wobei die beiden Behandlungsstufen als Festbettreaktoren ausgebildet sind. Durch diese Aufteilung ist ein optimales Einstellen der Bedingungen für die jeweilige Behandlungsstufe möglich, so ist es z. B. möglich den schon oben erwähnten pH-Wert für jede Behandlungsstufe getrennt einzustellen. Als besonders vorteilhaft erweist es sich, auch den Gesamtvolumenstrom einzustellen bzw. regeln zu können. Durch diese Maßnahme lassen sich jederzeit die optimalen Abbaubedingungen für beide Behandlungsstufen gewährleisten.

In der vorliegenden Erfindung wird nun der zweite anaerob behandelte Abwasserteilstrom zusammen mit dem ersten - noch unbehandelten - Teilstrom in die aerobe Behandlungsstufe eingeleitet. Die aerobe Behandlungsstufe hat dadurch zwei Aufgaben. Zum Einen den Abbau organischer Schadstoffe und zum Anderen das bei der anaeroben Behandlung entstandene giftige Nitrit direkt zu Nitrat zu oxidieren.

In einer weiteren vorteilhaften Ausgestaltung der Erfindung werden die in der aeroben bzw. anaeroben Behandlungsstufe gereinigten Abwässer solange im Kreis zurück zur jeweiligen Behandlungsstufe geführt, bis der Schadstoffabbau einen gewissen Grenzwert erreicht hat.

In der Erfindung wird der anaerob behandelte Abwasserteilstrom wie zuvor in die aerobe Behandlungsstufe geleitet. Nach der aeroben Behandlung wird der Abwasserstrom zur Weiterbehandlung wieder zurückgeführt und wie oben wieder in zwei Teilströme aufgeteilt, die wiederum wie zuvor den beiden Behandlungsstufen zugeführt werden. Durch den mehrmaligen Durchlauf des Abwassers durch beide Behandlungsstufen läßt sich der Schadstoffabbau optimieren.

In der Erfindung wird zur Kontrolle und Steuerung der Abwässerströme ein Vorlagebehälter verwendet. In diesen Vorlagebehälter strömen die zu behandelnden Abwässer. Eine Pumpe fördert den Abwasserstrom zu der oder den aeroben bzw. anaeroben Behandlungsstufen. Durch entsprechende Ventile lassen sich die Einzelströme dabei optimal den geforderten Schadstoffabbaubedingungen anpassen. Hier kann z. B. auch eine manuelle oder automatische Überwachung der Abbauprozesse sinnvoll eingreifen. Bei Kreislaufprozessen wird das bereits behandelte Abwasser in den Vorlagebehälter zurückgeführt. Durch diese Maßnahme läßt sich ein besonders effektiver und gleichmäßiger Schadstoffabbau erreichen, da unterschiedliche Schadstoffkonzentrationen im zu behandelnden Abwasser gepuffert werden können.

Die Erfindung betrifft ferner eine Anlage zur biologischen Behandlung von Abwasser, die dazu geeignet ist das Verfahren gemäss dem Anspruch 1 durchzuführen.

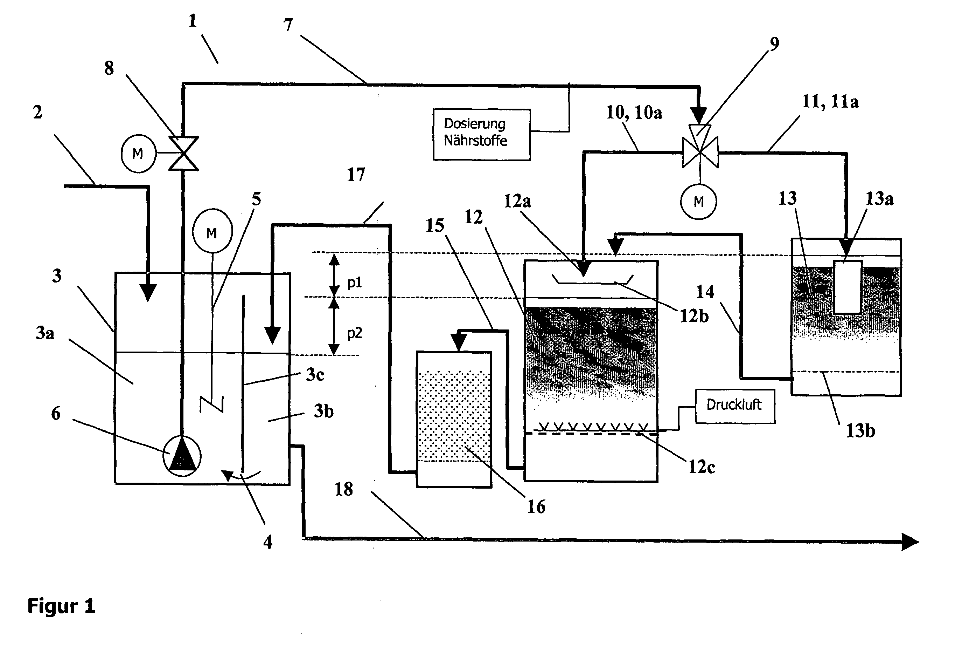

Die Erfindung wird anhand des in der beiliegenden Zeichnung gezeigten Ausführungsbeispieles näher erläutert. Es zeigt
- Fig. 1: eine schematischen Skizze einer bevorzugten Ausführung der erfindungsgemäßen Abwasserreinigungsanlage

Figur 1 zeigt eine schematische Zeichnung der erfindungsgemäßen Abwasserreinigungsanlage 1. Das zu behandelnde Abwasser 2 wird in einem Vorlagebehälter 3 gesammelt. Der Vorlagebehälter besteht hier aus zwei Kammern 3a, 3b mit einer zugehörigen Trennwand 3c. Am Fuß des Vorlagebehälters 3 befindet sich eine Verbindungsöffnung 4. Das Abwasser wird in der linken Kammer 3a gesammelt. Ein Rührwerk 5 sorgt für eine ausreichende Durchmischung des ankommenden unbehandelten Abwassers 2 mit dem schon teilweise gereinigten Abwasser bzw. dem durch Öffnung 4 zuströmenden gereinigten Wasser. Mittels einer Pumpe 6 wird das Wasser über eine Zuleitung 7 zu den beiden Behandlungsstufen 12, 13 gepumpt. Dabei kann der Abwasservolumenstrom über ein Stellventil 8 individuell eingestellt werden. In die Zuleitung 7 kann entsprechend den Anforderungen der Behandlungsstufen Nährstofflösung zudosiert werden, z. B. Phosphorsäure. Ein Verteilerventil 9 teilt das Wasser in zwei Teilströme 10, 11 auf, die durch zugehörige Zuleitungen 10a, 11a die aerobe Behandlungsstufe 12, bzw. die anaerobe Behandlungsstufe13 erreichen. Das Verteilerventil 9 ist einstellbar, und kann so z. B. entsprechend der Belastung des Wassers mit Ammonium eingestellt werden. Dies kann sowohl manuell als auch elektrisch erfolgen, sofern eine entsprechende Steuerungseinrichtung vorhanden ist.

Der in die Anaerobstufe 13 eingeleitete Teilstrom 11 durchläuft ein Becken gefüllt mit einem Trägermaterial, an dem sich die Anaerobbakterien ansiedeln können. Der Einlauf 13a ist so ausgeführt, daß ein möglichst turbulenzfreier Zulauf gewährleistet ist. Das Becken ist mit einem Siebboden 13b ausgestattet. Es ist an dieser Stelle unbedeutend, ob der Durchfluß des Abwassers von oben nach unten oder umgekehrt erfolgt.

Hinter der Anaerobstufe 13 wird das Wasser über die Zuleitung 14 in die Aerobstufe 12 eingeleitet. Hier wird es gemeinsam mit dem Abwasser aus dem Teilstrom 10 aerob behandelt. Die aerobe Abbaustufe 13 erfüllt also zwei Aufgaben: Zum Einen den Abbau organischer Schadstoffe und zum Anderen das bei der anaeroben Behandlung entstandene giftige Nitrit direkt zu Nitrat zu oxidieren. Die Aerobabbaustufe 12 wird mit Luftsauerstoff von unten nach oben versorgt. Das Abwasser durchläuft die Behandlungsstufe 12 von oben nach unten. Im Zulauf 12a ist ein Prallteller 12b installiert, um eine gleichmäßige Verteilung des Wassers über die Oberfläche der Behandlungsstufe 12 zu erreichen. Der Behälter ist ebenfalls mit einem Siebboden 12c ausgestattet, durch den das Wasser durchtreten kann, um weiterbehandelt zu werden.

Hinter der Aerobstufe 12 wird das Wasser über die Leitung 15 in einen Sandfilter 16 geleitet, wo Überschußschlamm aus der aeroben Behandlungsstufe 12 zurückgehalten werden soll. Vom Sandfilter 16 aus wird das Wasser dann über die Leitung 17 zurück in den Vorlagebehälter 3 geleitet. Durch die Öffnung 4 in der Trennwand 3c kann das behandelte Wasser wieder von der rechten Seite der Kammer 3b auf die linke Seite 3a fließen und über die Pumpe 6 erneut der Behandlung zugeführt werden. Gleichzeitig befindet sich auf der rechten Seite 3b des Vorlagebehälters der Ablauf 18 für das behandelte gereinigte Wasser.

Die beiden Abbaustufen 12, 13 sowie der Sandfilter 16 werden durch Manometer, hier nicht gezeigt, überwacht und bei Überschreiten zulässiger Druckwerte auf herkömmliche Art zurückgespült.

Der Vorteil dieses Verfahrens ist es, daß die Fließgeschwindigkeiten in den beiden Abbaustufen 12, 13 individuell eingestellt werden können unabhängig von der zulaufenden Menge des Abwassers 2. Dies ermöglicht eine optimale Beladungsdichte des Trägermaterials unter Minimierung des Anlagenvolumens. Durch die Abstimmung zwischen Stellventil 8 und Verteilventil 9 kann die Fließgeschwindigkeit in den Behältern der aeroben und anaeroben Behandlungsstufen 12, 13 auch unterschiedlich eingestellt werden.

Durch die erfindungsgemäße Anordnung haben auch sich ändernde Volumenströme oder schwankende Schadstofffrachten keine negativen Auswirkungen mehr auf den Behandlungsprozeß, da das Nahrungsangebot im Vorlagebehälter 3 gepuffert wird. Durch den Kreislaufprozeß bleibt die Fließgeschwindigkeit in beiden Behältern der Behandlungsstufen 12, 13 auch bei sich ändernden Volumenströmen konstant. Durch den Vorlagebehälter 3 werden Spitzen in der Schadstofffracht ausgeglichen.

Durch die Aufteilung in getrennte Abbaustufen 12, 13 werden gegenseitige negative Beeinflussungen vermieden. So kann die pH Absenkung in der Anaerobstufe 13 durch eine pH Korrektur (hier nicht dargestellt) ausgeglichen werden bevor das Wasser in die Aerobstufe 12 gelangt.

Die Anlage kann so gestaltet werden, daß der gesamte Durchfluß mit einer Pumpe 8 gewährleistet werden kann. Die Steuerung erfolgt durch die Einstellung der geodätischen Höhenunterschiede zwischen den Behältern der Behandlungsstufen 12, 13 bzw. Sandfilter 16. Dabei können die erforderlichen Druckdifferenzen durch Verstellen der Einlaufhöhen am Ende von Leitung 14, 15 und 17 eingestellt werden.

## Patentansprüche

1. Verfahren zur biologischen Reinigung von Abwässern in Festbettreaktoren, wobei das Abwasser (2) in zwei Teilströme (10, 11) aufgeteilt wird, wobei der erste Teilstrom (10) eine aerobe Behandlungsstufe (12) und der zweite Teilstrom (11) eine anaerobe Behandlungsstufe (13) durchläuft, wobei die beiden Behandlungsstufen (12, 13) jeweils als getrennte Festbettreaktoren ausgebildet sind,
**dadurch gekennzeichnet, daß**
der zweite Teilstrom (11) nach passieren der anaeroben Behandlungsstufe (13) gemeinsam mit dem ersten, unbehandelten Teilstrom (10) der aeroben Behandlungsstufe (12) zugeleitet wird, wobei das Verhältnis zwischen den beiden Teilströmen (10, 11) mit einem Verteilerventil und der Gesamtvolumenstrom mit einem Stellventil einstell- und regelbar ist, wobei beide Teilströme (10, 11) gemeinsam die aerobe Behandlungsstufe (12) durchlaufen, wobei das teilweise gereinigte Abwasser nach der gemeinsamen aeroben Behandlung in einen Vorlagebehälter (3) geleitet wird, in dem das zu behandelnde Abwasser (2) gesammelt wird, so dass das anaerob und aerob behandelte, teilweise gereinigte Abwasser zumindest teilweise mit dem zu behandelnden Abwasser (2) vermischt wird, und in den beiden Teilströmen (10, 11) den jeweiligen Behandlungsstufen (12,13) zugeführt wird.

2. Verfahren zur biologischen Reinigung von Abwässern nach Anspruch 1,
**dadurch gekennzeichnet, daß**
die in der aeroben Behandlungsstufe (12) bzw. anaeroben Behandlungsstufe (13) gereinigten Abwässer im Kreis zurück zur jeweiligen Behandlungsstufe geführt werden.

3. Anlage zur biologischen Reinigung von Abwässern,
**dadurch gekennzeichnet, daß**
die Anlage dazu geeignet ist, ein Verfahren gemäß mindestens einem der Ansprüche 1 oder 2 durchzuführen.

## Claims

1. Process for the biological treatment of waste waters in fixed-bed reactors, the waste water (2) being divided into two part streams (10, 11), the first part stream (10) passing through an aerobic treatment stage (12) and the second part stream (11) passing through an anaerobic treatment stage (13), the two treatment stages (12, 13) each being formed as separate fixed-bed reactors, **characterized in that**, after passing the anaerobic treatment stage (13), the second part stream (11) is fed together with the first untreated part stream (10) into the aerobic treatment stage (12), it being possible to set and regulate the ratio between the two part streams (10, 11) with a distributor valve and the overall volumetric flow with an adjusting valve, the two part streams (10, 11) passing together through the aerobic treatment stage (12), after the joint aerobic treatment the partially cleaned waste water being introduced into a recipient tank (3), in which the waste water (2) to be treated is collected, so that the anaerobically and aerobically treated, partially cleaned waste water is mixed at least partially with the waste water (2) to be treated, and is fed in the two part streams (10, 11) to the respective treatment stages (12, 13).

2. Process for the biological cleaning of waste waters according to Claim 1, **characterized in that** the waste waters cleaned in the aerobic treatment stage (12) and anaerobic treatment stage (13) are recirculated to the respective treatment stage.

3. Plant for the biological cleaning of waste waters, **characterized in that** the plant is suitable for carrying out a process according to at least one of Claims 1 or 2.

## Revendications

1. Procédé d'épuration biologique d'eaux usées dans des réacteurs à lit fixe, dans lequel l'eau usée (2) est divisée en deux écoulements partiels (10, 11), le premier écoulement partiel (10) traversant un étage (12) de traitement aérobie et le deuxième écoulement partiel (11) un étage (13) de traitement anaérobie, les deux étages de traitement (12, 13) étant configurés sous la forme de réacteurs séparés à lit fixe,
**caractérisé en ce que**
après avoir traversé l'étage (13) de traitement anaérobie, le deuxième écoulement partiel (11) est amené à l'étage (12) de traitement aérobie en même temps que le premier écoulement partiel (10) non traité,
**en ce que** le rapport entre les deux écoulements partiels (10, 11) peut être réglé ou régulé au moyen d'une vanne de répartition et l'écoulement volumique global peut être réglé ou régulé au moyen d'une vanne de réglage,
**en ce que** les deux écoulements partiels (10, 11) traversent ensemble l'étage (12) de traitement aérobie,
**en ce que** l'eau usée partiellement épurée qui provient du traitement aérobie commun est amenée dans un récipient de réserve (3) dans lequel l'eau usée (2) à traiter est recueillie, de sorte que l'eau usée partiellement épurée par traitement anaérobie et traitement aérobie est mélangée au moins en partie avec l'eau usée (2) à traiter et est amenée dans les deux écoulements partiels (10, 11) aux étages de traitement (12, 13) respectifs.

2. Procédé d'épuration biologique d'eaux usées selon la revendication 1, **caractérisé en ce que** l'eau usée épurée dans l'étage (12) de traitement aérobie ou dans l'étage (13) de traitement anaérobie est renvoyée vers l'étage de traitement respectif.

3. Installation d'épuration biologique d'eau usée, **caractérisée en ce que** l'installation convient pour exécuter un procédé selon au moins l'une des revendications 1 ou 2.
